(19) **Europäisches Patentamt / European Patent Office / Office européen des brevets**

(11) **EP 1 388 411 B1**

(12) **EUROPÄISCHE PATENTSCHRIFT**

(45) Veröffentlichungstag und Bekanntmachung des Hinweises auf die Patenterteilung:
**06.01.2010 Patentblatt 2010/01**

(51) Int Cl.:
***B29C 67/00*** *(2006.01)*     ***B29C 35/00*** *(2006.01)*
***B29C 67/04*** *(2006.01)*

(21) Anmeldenummer: **03016444.6**

(22) Anmeldetag: **21.07.2003**

(54) **Verfahren und Vorrichtung zur Herstellung eines dreidimensionalen Objekts mittels Sintern**

Method and device for producing a three-dimensional object by sintering

Procédé et appareil pour la production d'un objet tridimensionnel par frittage

(84) Benannte Vertragsstaaten:
**DE FR GB IT**

(30) Priorität: **09.08.2002 DE 10236697**

(43) Veröffentlichungstag der Anmeldung:
**11.02.2004 Patentblatt 2004/07**

(73) Patentinhaber: **EOS GmbH Electro Optical Systems**
**82152 Krailling (DE)**

(72) Erfinder: **Keller, Peter**
**82152 Krailling/München (DE)**

(74) Vertreter: **Hofer, Dorothea et al**
**Prüfer & Partner GbR**
**Patentanwälte**
**Sohnckestrasse 12**
**81479 München (DE)**

(56) Entgegenhaltungen:
**EP-A- 0 388 095      WO-A-96/29192**
**US-A- 5 908 569      US-A- 6 153 142**

**Beschreibung**

Die Erfindung betrifft ein Verfahren und Vorrichtung zur Herstellung eines dreidimensionalen Objekts mittels Sintern nach der Patentansprüche 1 bzw. 12.

Ein derartiges Verfahren bzw. eine derartige Vorrichtung sind aus der EP 0 764 079 A1 bekannt. Die dort beschriebene Lasersintervorrichtung weist Heizstrahler zum Vorheizen des Sinterpulvers auf. Die Heizleistung der Heizstrahler ist regelbar um das Pulver auf eine vorgegebene Temperatur vorzuheizen.

Aus der US 6,153,142 ist eine Lasersintervorrichtung und ein Lasersinterverfahren bekannt, bei der bzw. bei dem die Oberflächentemperatur des Pulvers im Laserfokus gemessen wird und in Abhängigkeit davon die Laserleistung so geregelt wird, daß die Temperatur im Fokus konstant bleibt.

Die US 5,908,569 offenbart eine Vorrichtung gemäß dem Oberbegriff des Anspruchs 12 zum Herstellen eines dreidimensionalen Objekts durch aufeinander folgendes Verfestigen von Schichten eines verfestigbaren Materials an dem jeweiligen Querschnitt des Objekts entsprechenden Stellen mittels Strahlung. Die Vorrichtung weist einen Träger zum Tragen des zu bildenden Objekts auf und eine Heizvorrichtung mit einem Strahlungsheizer ist oberhalb des Trägers angeordnet, um das verfestigbare Material zu erwärmen. Die US 5908569 offenbart weiter ein Verfahren gemäß dem Oberbegriff des Anspruchs 1.

Das Vorerwärmen bzw. Vorheizen von neu auf eine Schicht aufgetragenen Pulvers bis auf eine Arbeitstemperatur $T_A$, die wenig unterhalb des Schmelzpunkts bei teilkristallinen Thermoplasten bzw. bis wenig unterhalb der Glasübergangstemperatur bei amorphen Thermoplasten liegt, wird vorgenommen, um Laserenergie einzusparen und einen kontinuierlichen Bauprozeß zu ermöglichen Die zu wählende Arbeitstemperatur $T_A$ hängt nicht nur von der Art des Thermoplasten ab und kann nicht einfach aus den theoretischen Schmelz- oder Glasumwandlungspunkten bestimmt werden. Es sind vielmehr eine Reihe weiterer Stoff- und Anlagenfaktoren zu berücksichtigen. So können in der Praxis chargenbedingte Unterschiede des Schmelz- bzw. Glasumwandlungspunktes vorkommen. Ferner können Umwelteinflüsse die Umwandlungspunkte beeinflussen, z.B. die Alterung des Pulvers oder Feuchteeinfluß. Auch werden beispielsweise Mischungen von Chargen des gleichen Stoffes mit wechselnder Zusammensetzung verwendet, insbesondere Mischungen von Neu- und Gebrauchtpulver, d.h. unverfestigtes Pulver aus früheren Bauprozessen.

Bei den bekannten Lasersintervorrichtungen und -verfahren wird die Arbeitstemperatur und auch die erforderliche Laserleistung nach Erfahrungswerten für das jeweilige Pulver oder aufgrund von Tests für jeden Bauprozeß eingestellt. Eine Anpassung an bestimmte Pulvereigenschaften, wie z.B. eine Anpassung daran, ob es sich um Neupulver, Recyclingpulver, Mischungen von Pulvern handelt, ist nur durch Vortests möglich. Die Verwendung von Erfahrungswerten ist fehlerbehaftet, die Vornahme von Tests zeit- und kostenintensiv.

Es ist Aufgabe der vorliegenden Erfindung, ein Verfahren und eine Vorrichtung zum Herstellen eines dreidimensionalen Objektes mittels Sintern bereitzustellen, mit dem bzw. mit der die beschriebenen Nachteile vermieden werden und mit der die Qualität der gebildeten Objekte erhöht wird.

Die Aufgabe wird gelöst durch ein Verfahren nach Patentanspruch 1 bzw. eine Vorrichtung nach Patentanspruch 12. Weiterbildungen der Erfindung sind in den Unteransprüchen angegeben.

Gemäß der Erfindung wird in der Vorerwärmungsphase beim Lasersintern ein Temperaturprofil des aktuell verwendeten pulverförmigen Materials derart erstellt, daß durch Aufzeichnung der von dem Pulver aufgenommenen Energie pro Temperaturintervall materialspezifische Größen, wie die spezifische Wärmekapazität, die Lage von Übergangstemperaturen wie z.B. der Glasübergangstemperatur, der Onsettemperatur, der Schmelztemperatur bestimmt werden.

Ein Vorteil besteht darin, daß mit den so ermittelten materialspezifischen Größen die Arbeitstemperatur optimal im Hinblick auf das verwendete Pulver eingestellt werden kann. Angepaßt an diese Temperatureinstellung kann dann aus den gemessenen Größen auch die benötigte Laserenergie zum Auf- bzw. Anschmelzen des Pulvers passend gewählt werden und die Regelung der Heizkreise feinjustiert werden. Damit wird der weitere Vorteil gegenüber einer Messung des Pulvers außerhalb der Lasersintervorrichtung deutlich, der darin besteht, daß Übertragungskorrekturen zwischen Laborgerät und Lasersintervorrichtung entfallen.

Weitere Merkmale und Zweckmäßigkeiten der Erfindung ergeben sich aus der Beschreibung von Ausführungsbeispielen anhand der Figuren. Von den Figuren zeigen:

Fig. 1     eine schematische Darstellung eines Ausführungsbeispiels der Vorrichtung;

Fig. 2     eine schematische Darstellung eines Details der Vorrichtung von Fig. 1;

Fig. 3     ein Flußdiagramm eines Ausführungsbeispiels des Verfahrens;

Fig. 4     ein Beispiel eines mittels des Verfahrens erhaltenen Temperaturprofils für ein als Sinter-pulver verwendetes Polyamid; und

Fig. 5     ein Beispiel eines mittels des Verfahrens erhaltenen Temperaturprofils für ein als Sinter-pulver verwendetes Polystyrol.

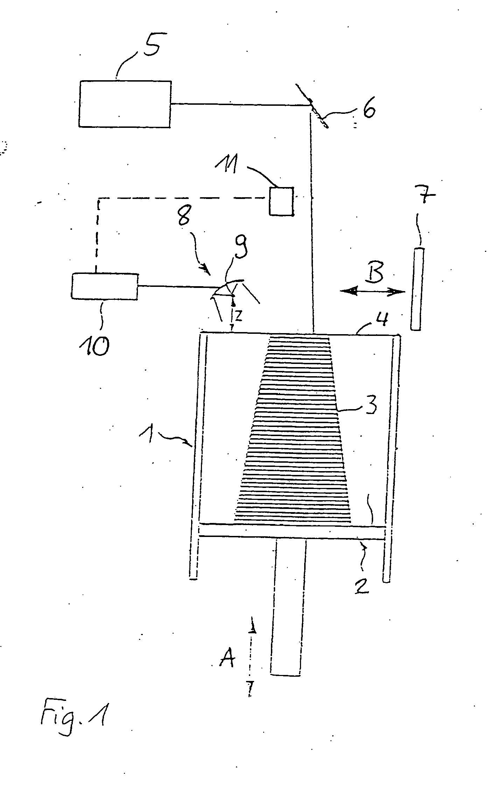

Fig. 1 zeigt eine Lasersintervorrichtung als Ausführungsbeispiel einer erfindungsgemäßen Vorrichtung. Die Lasersintervorrichtung weist einen nach oben offenen Behälter 1 auf. In dem Behälter 1 ist ein Träger 2 zum Tragen des zu bildenden Objektes 3 vorgesehen. Der Träger 2 ist mittels eines schematisch durch die Pfeile A angedeuteten Antriebs in dem Behälter 1 in vertikaler Richtung auf- und abbewegbar. Der obere Rand des Behälters 1 definiert eine Arbeitsebene 4. Oberhalb der Arbeitsebene 4 ist eine Bestrahlungseinrichtung 5 in Form eines Lasers angeordnet, die einen gerichteten Lichtstrahl abgibt, der über eine Ablenkeinrichtung 6 auf die Arbeitsebene 4 abgelenkt wird. Ferner ist ein Beschichter 7 zum Aufbringen einer Schicht eines zu verfestigenden Pulvermaterials auf die Oberfläche des Trägers 2 oder eine zuletzt verfestigte Schicht vorgesehen. Der Beschichter 7 ist mittels eines durch die Pfeile B schematisch angedeuteten Antriebs über die Arbeitsebene 4 hin- und herbewegbar.

Die Vorrichtung weist außerdem eine über der Arbeitsebene 4 angeordnete Heizeinrichtung 8 zum Vorerwärmen einer aufgetragenen aber noch nicht gesinterten Pulverschicht auf eine für das Sintern geeignete Arbeitstemperatur $T_A$ auf. Die Heizeinrichtung ist beispielsweise in Form eines oder einer Mehrzahl von Heizstrahlern 9, z.B. Infrarotstrahlern ausgebildet, der bzw. die so oberhalb der Arbeitsebene angeordnet sind, daß die aufgetragene Pulverschicht gleichmäßig erwärmbar ist. Die Heizeinrichtung ist ferner mit einer Steuer- und/oder Regeleinrichtung 10 zum Steuern und/oder Regeln der Heizleistung verbunden.

Ferner ist in einem Abstand oberhalb der Arbeitsebene 4 eine Temperaturmeßeinrichtung 11 vorgesehen, die beispielsweise einen oder mehrere Temperaturmeßsensoren, z.B. in Form von Pyrometern umfaßt und die zum berührungslosen Messen der Temperatur der zuletzt aufgetragenen bzw. obersten Pulverschicht dient.

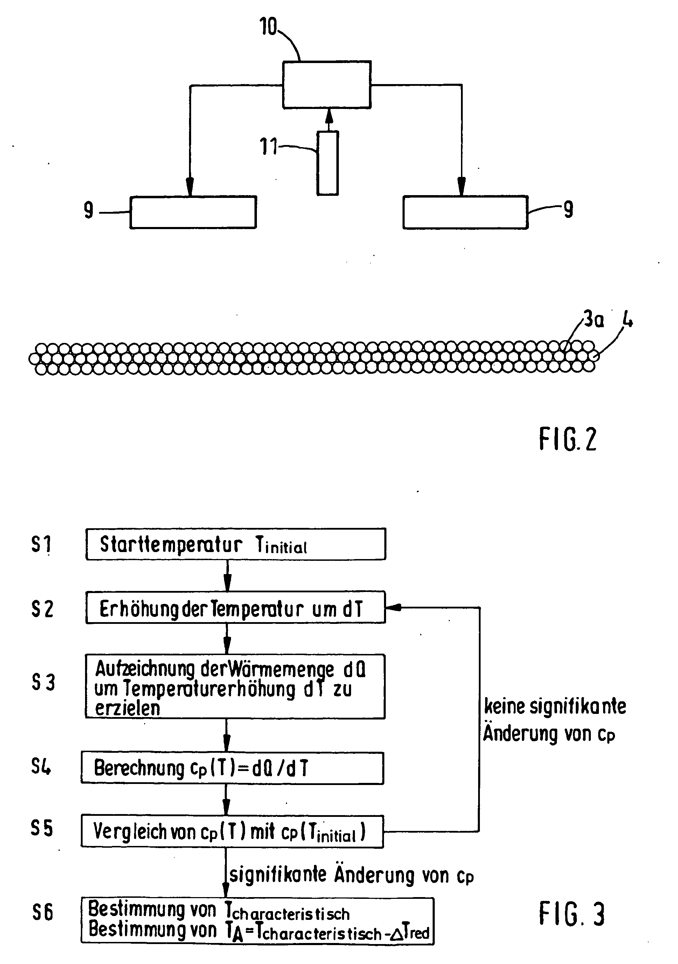

Fig. 2 zeigt ein Detail der Vorrichtung von Fig. 1. Heizstrahler 9 sind in einem Abstand über der Arbeitsebene 4 in der sich die zuletzt aufgetragene Pulverschicht 3a befindet angeordnet. Ferner ist ein Pyrometer 11 oberhalb der Arbeitsebene 4 angeordnet und ein Signalausgang der Pyrometers ist mit der Heizsteuerung/-regelung 10 verbunden.

Die Heizsteuerung/-regelung 10 und der Ausgang des Pyrometers sowie die Antriebe für die Höhenverstellung des Trägers und der Antrieb für den Beschichter sowie die Steuerung der Ablenkeinrichtung und des Lasers sind wiederum mit einem nicht dargestellten Steuer- und Auswertecomputer verbunden.

Das erfindungsgemäße Verfahren läuft in der Lasersintervorrichtung gemäß den beispielhaft in Fig. 3 dargestellten Schritten ab. Vor dem Bauprozeß ist es erforderlich, die Lasersintervorrichtung aufzuheizen. Hierzu wird in einem ersten Schritt (S1) eine Schicht des pulverförmigen Materials, bevorzugt eines Kunststoffmaterials wie z.B. Polyamid oder Polystyrol, von vorbestimmten Dicke, die größer ist, als die Dicke der Schichten des Objekts, auf den Träger 2 aufgetragen. Die Dicke dieser ersten Schicht beträgt z.B. etwa das zehnfache der Dicke der Objektschichten. Die Heizeinrichtung wird dann so gesteuert, daß die erste Schicht auf eine Anfangstemperatur $T_{initial}$ gebracht wird,

die über die Temperaturmeßeinrichtung erfaßt wird. Die Anfangstemperatur $T_{initial}$ wird so gewählt, daß sie erheblich niedriger ist als die spätere Arbeitstemperatur $T_A$.

Sobald $T_{initial}$ erreicht ist, wird im Schritt S2 die Temperatur der Pulverschicht durch Steuerung der Heizleistung der Heizeinrichtung um einen vorgegebenen Schritt dT, z.B. um 1°C, erhöht und die erforderliche Zeit $\Delta t$ gewartet, bis die Schicht die neue Temperatur T = $T_{intial}$ + dT angenommen hat. Die während dieser Zeit über die Heizeinrichtung eingebrachte Heizleistung ist über die Heizsteuerung bekannt. Sie wird aufgezeichnet und zur eingebrachten Heizenergie QdT integriert, welche im Schritt S3 aufgezeichnet wird. Im Schritt S4 wird daraus die Wärmemenge dQ berechnet, die für die Temperaturerhöhung um dT erforderlich ist. Damit wird die spezifische Wärmekapazität $C_P$ des Materials in Abhängigkeit von der Temperatur T ermittelt:

$$C_P(T) = dQ/dT.$$

Die Temperatur wird nun schrittweise um dT erhöht und jeweils die Wärmemenge dQ aufgezeichnet und $C_P(T)$ berechnet. Aus diesen berechneten Werten ergibt sich, ein Temperaturprofil dQ/dT in Abhängigkeit der eingestellten Temperatur T.

Bei dem erfindungsgemäßen Verfahren wird ferner im Schritt S5 jeweils die zu der aktuellen Temperatur T ermittelte Wärmekapazität $c_P(T)$ mit der Wärmekapazität bei der Temperatur $T_{initial}$ $c_P(T_{initial})$ verglichen. Falls keine signifikante Änderung von $c_P$ erfolgt, wird die Temperatur gemäß Schritt S2 weiter um dT erhöht und mit den Schritten S3 bis S5 fortgefahren. Erfolgt jedoch eine signifikante Änderung von $c_P$, so bedeutet dies, daß man sich im Bereich eines Umwandlungspunkte befindet, d.h. bei amorphen Thermoplasten in der Nähe der Glasübergangstemperatur bzw. bei teilkristallinen Thermoplasten in der Nähe des Schmelzpeaks. Eine signifikante Änderung von $c_P$ wird definiert durch einen für jedes Material bestimmten Faktor der Änderung von $c_P(T)$ gegenüber $c_P(T_{initial})$. Nach Feststellen der signifikanten Veränderung von $c_P$ wird die Temperatur nicht weiter gesteigert, um nicht das Pulver zu verfestigen. Ein leichtes Erweichen und Ansintern der Schicht kann jedoch in dieser Verfahrensstufe hingenommen werden und beeinflußt den späteren Bauprozeß nicht. Dieser letzte Meßpunkt hat die Temperatur $T_{final}$. Aus dem ermittelten Temperaturprofil $c_P(T)$ wird eine für den Phasenübergang des Materials charakteristische Temperatur $T_{characteristisch}$ bestimmt. Die Arbeitstemperatur $T_A$ wird anschließend im Schritt S6 durch Abzug eines vorbestimmten Temperaturbetrages $\Delta T_{red}$ von der charakteristischen Temperatur $T_{characteristisch}$ festgelegt und und an die Heizregelung als Führungsgröße für den Bauprozeß übergeben. Die charakteristische Temperatur $T_{characteristisch}$ ist eine charakteristische Größe zur Kennzeichnung der beginnenden Phasenumwandlung und kann z.B. die Onsettemperatur $T_{onset}$ für thermoplastische Polymere oder die Schmelztemperatur $T_{schmelz}$ für kristalline Stoffe sein.

Das Bestimmen von $T_{characteristisch}$ erfolgt bevorzugt über eine Softwareroutine der Maschinensteuerung. Der vorbestimmte Temperaturbetrag $\Delta T_{red}$ ist frei festlegbar und ergibt sich aus Erfahrungswerten für ein spezifisches Sinterpulver.

Die bevorzugten Anwendungsgebiete des erfindungsgemäßen Verfahrens liegen bei polymeren Sinterpulvern als Materialien. Bei diesen wird im allgemeinen als charakteristische Temperatur die Onsettemperatur $T_{onset}$ bestimmt, die als Schnittpunkt der Wendetangente ta an die Kurve $c_P(T)$ im Punkt $dc_p/dT = 0$ mit der Ausgleichsgeraden im Meßbereich $c_p$ = konst. definiert ist.

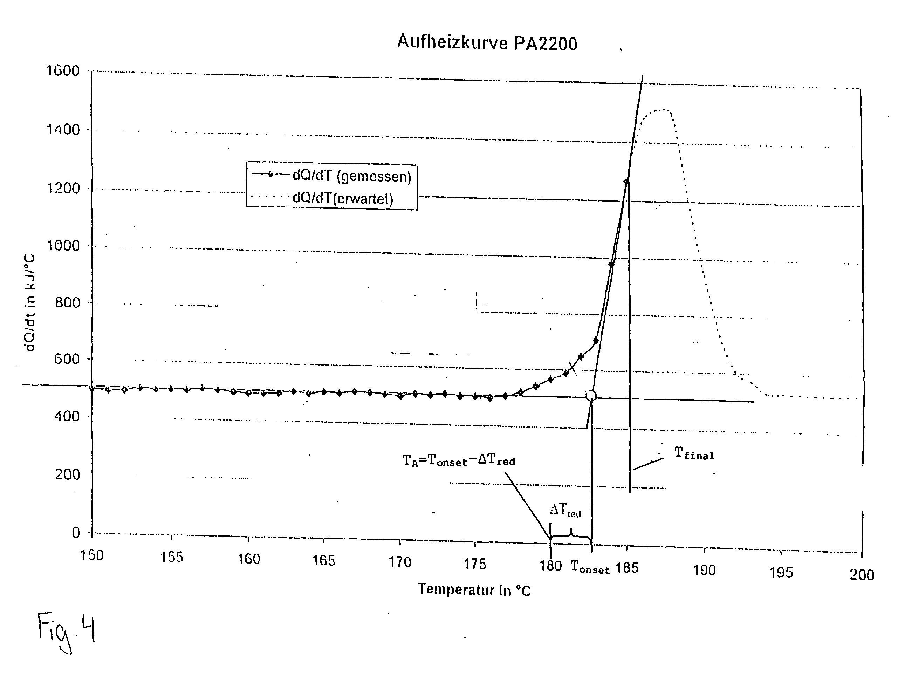

Fig. 4 zeigt die Aufheizkurve bzw. das Temperaturprofil $dQ/dT(T)$ für ein Polyamid (PA), ein teilkristallines Polymer, als Sinterpulver. Für solche zum heutigen Zeitpunkt beim Lasersintern eingesetzte Polyamide beträgt die Arbeitstemperatur $T_A$ z.B. je nach Polyamid, nach Lasersintervorrichtung, nach Pulvercharge, Pulveralter und Pulverzustand zwischen etwa 170°C und etwa 185 °C. Die entsprechende Anfangstemperatur beträgt in diesem Fall etwa 140°C. Es wird bis zu einer Temperatur $T_{final}$ geheizt, bei der der Faktor $c_P(T_{final})$ zu $c_P(T_{initial})$ zwischen etwa 2 bis etwa 3 liegt. Die Arbeitstemperatur $T_A$ wird so gewählt, daß sie um etwa 1°C bis etwa 10°C unterhalb der Onsettemperatur $T_{onset}$ liegt.

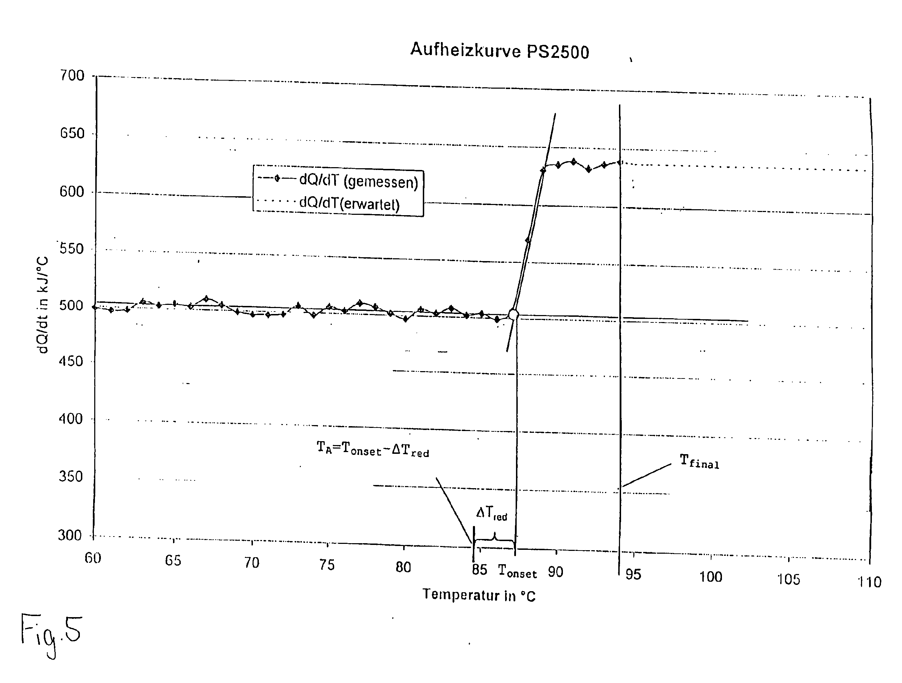

Fig. 5 zeigt die Aufheizkurve bzw. das Temperaturprofil $dQ/dT(T)$ für ein Polystyrol (PS), einen amorphen Thermoplasten. Die gewünschte Arbeitstemperatur $T_A$ beträgt etwa 85°C.

Die entsprechende Anfangstemperatur beträgt in diesem Fall etwa 60°C. Es wird bis zu einer Temperatur $T_{final}$ geheizt, bei der der Faktor $c_P(T_{final})$ zu $c_P(T_{initial})$ bei etwa 2.2 liegt. Die Arbeitstemperatur $T_A$ wird auf eine Temperatur von etwa 1°C bis etwa 15°C unter der Onsettemperatur $T_{onset}$ eingestellt.

Die Arbeitstemperatur $T_A$ wird somit sowohl für einen teilkristallinen Thermoplasten als auch für einen amorphen Thermoplasten in Abhängigkeit von einer über die Schritte S1 bis S6 tatsächlich ermittelten Übergangstemperatur bestimmt und ist somit optimal auf das verwendete Pulver eingestellt.

Nach Bestimmen der Arbeitstemperatur $T_A$ wird der übliche selektive Sinterprozeß durchgeführt. Typischerweise wird eine bestimmte Anzahl von Pulverschichten aufgebracht, bevor die erste Belichtung mit dem Laser stattfindet. Auch diese Schichten benötigen nach dem Auftragen wieder eine bestimmte Heizleistung für eine bestimmte Zeit. Durch Messung und Integration dieser Leistung erhält man die Wärmeaufnahme jeder neu aufgebrachten Schicht. Diese kann in Relation zu einem Standardwert bzw. Standarderwartungswert gesetzt werden. Liegt die Wärmeaufnahme höher als erwartet, dann ist mehr Energie zum Erwärmen des Pulvers notwendig. Eine Ursache kann z.B. feuchtes Pulver sein. Die Laserleistung kann an das Ergebnis dieser Messung angepaßt werden. Ferner kann mit dieser Messung auch ein Ungleichgewicht beim Energieeintrag zwischen Schichten festgestellt werden, die durch Bewegen des Beschichters 7 in die eine bzw. in die andere Richtung aufgetragen wurden. Dieses Ungleichgewicht kann durch unterschiedliche Schichtdicken, unterschiedliche Pulverdichten, unterschiedliche Feuchtegehalte etc. begründet sein. Um diese Unterschiede auszugleichen, kann ebenfalls die Laserleistung dem aktuell verarbeiteten Pulver und der aktuellen Justierung der Maschine angepaßt werden.

Der Bauprozeß für das Objekt erfolgt in bekannter Weise durch Auftragen einer Schicht, Vorheizen der Schicht auf die Arbeitstemperatur $T_A$, Belichten mit dem Laser an den dem Objekt entsprechenden Stellen, Absenken des Trägers 2 und Auftragen der nächsten Schicht, wobei diese Schritte so oft wiederholt werden, bis das Objekt fertiggestellt ist.

Die Erstellung des Temperaturprofils $c_P(T)$ muß nicht notwendigerweise vor dem Bauprozeß erfolgen, sondern kann auch während des Bauprozesses erfolgen, beispielsweise um eine Nachjustierung der Parameter durchzuführen.

Das Verfahren und die Vorrichtung sind nicht auf die beschriebene Ausgestaltung beschränkt. Z.B. kann die Laserleistung an das Ergebnis der Messung $c_P(T)$ angepaßt werden.

Das Verfahren ist ferner nicht auf Kunststoffpulver beschränkt, sondern kann auch bei Metallpulvern, Keramikpulvern, etc. eingesetzt werden. Die Temperatur $T_{characteristisch}$ ist dann für das verwendete Pulver z.B. als Schmelztemperatur zu wählen. Bevorzugte Anwendung findet es jedoch bei Kunststoffpulvern.

Die Erfindung ist ferner nicht auf ein Verfahren und eine Vorrichtung zum Lasersintern beschränkt, sondern kann auch das Sintern mittels anderen Strahlungsquellen, z.B. das Sintern über eine Infrarotstrahlungsquelle unter Verwendung einer Maske zum Erzeugen der Querschnitte des Objekts eingesetzt werden.

**Patentansprüche**

1. Verfahren zum Herstellen eines dreidimensionalen Objekts durch schichtweises Verfestigen eines pulverförmigen Materials durch Sintern des Materials an dem Querschnitt des Objekts entsprechenden Stellen mittels Einwirkung von Strahlungsenergie mit den Schritten:

   Aufbringen einer Schicht des pulverförmigen Materials auf eine Unterlage (2) oder eine zuvor gesinterte Schicht;
   Vorerwärmen des pulverförmigen Materials auf eine Arbeitstemperatur ($T_A$) unterhalb der Temperatur bei der das Pulver gesintert wird; und Sintern des Materials an den dem Querschnitt des Objekts in der Schicht entsprechenden Stellen; wobei
bei wenigstens zwei Temperaturen ein Schritt des gesteuerten Erwärmens einer aufgetragenen Pulverschicht durchgeführt wird, **dadurch gekennzeichnet dass**
der Schritt des gesteuerten Erwärmens das Bestimmen der von dem Pulver beim Vorwärmen aufgenommenen Wärmemenge (dQ) pro Temperaturerhöhung (dT) beinhaltet.

2. Verfahren nach Anspruch 1, **dadurch gekennzeichnet, daß** die Änderung (dQ/dT) der aufgenommenen Wärmemenge pro Temperaturerhöhung in Abhängigkeit von der Temperatur bestimmt wird.

3. Verfahren nach Anspruch 1 oder 2, **dadurch gekennzeichnet, daß** aus der Änderung der aufgenommenen Wärmemenge pro Temperaturerhöhung eine materialspezifische Temperatur ($T_{characteristisch}$) des pulverförmigen Materials wie die Schmelztemperatur und/oder die Glasübergangstemperatur und/oder die Onsettemperatur bestimmt werden.

4. Verfahren nach Anspruch 3, **dadurch gekennzeichnet, daß** in Abhängigkeit von der ermittelten Änderung die Arbeitstemperatur ($T_A$), auf die das Pulver vorzuerwärmen ist, eingestellt wird.

5. Verfahren nach Anspruch 4, **dadurch gekennzeichnet, daß** die Arbeitstemperatur ($T_A$) so eingestellt wird, daß sie um eine vorgegebene Temperaturdifferenz ($\Delta T_{red}$) unterhalb einer ermittelten materialspezifischen Temperatur ($T_{characteristisch}$) liegt.

6. verfahren nach einem der Ansprüche 1 bis 5, **dadurch gekennzeichnet, daß** in Abhängigkeit von der ermittelten aufgenommenen Wärmemenge pro Temperaturerhöhung die zum Sintern erforderliche Leistung der Strahlungsquelle bestimmt wird.

7. Verfahren nach einem der Ansprüche 1 bis 6, **dadurch gekennzeichnet, daß** in Abhängigkeit von der ermittelten aufgenommenen Wärmemenge pro Temperaturerhöhung die Heizleistung einer zum Vorerwärmen verwendeten Heizeinrichtung (8,9) gesteuert und/oder geregelt wird.

8. Verfahren nach einem der Ansprüche 1 bis 7, **dadurch gekennzeichnet, daß** der Schritt des Bestimmens der von dem Pulver aufgenommenen Wärmemenge pro Temperatur erhöhung vor dem Bauprozeß an einer aufgetragenen Pulverschicht durchgeführt wird.

9. Verfahren nach einem der Ansprüche 1 bis 8, **dadurch gekennzeichnet, daß** der Schritt des Bestimmens der von dem Pulver aufgenommenen Wärmemenge pro Temperatur erhöhung während des Bauprozesses durchgeführt wird.

10. Verfahren nach einem der Ansprüche 1 bis 9, **dadurch gekennzeichnet, daß** als Strahlungsquelle ein Laser verwendet wird.

11. Verfahren nach einem der Ansprüche 1 bis 10, **dadurch gekennzeichnet, daß** als Pulver ein Kunststoffpulver, bevorzugt ein Polyamid oder Polystyrol verwendet wird.

12. Vorrichtung zum Herstellen eines dreidimensionalen Objekts durch schichtweises Verfestigen eines pulverförmigen Materials durch Sintern des Materials an dem Querschnitt des Objekts entsprechenden Stellen mittels Einwirkung von Strahlungsenergie mit:

einer Materialauftragevorrichtung (7) zum Auftragen des pulverförmigen Materials auf eine Unterlage (2) oder eine zuvor verfestigte Schicht;
einer Heizeinrichtung (8, 9) zum Vorerwärmen der aufgetragenen Schicht auf eine Arbeitstemperatur ($T_A$) unterhalb der Temperatur bei der das Pulver gesintert wird; und
einer Bestrahlungseinrichtung (5) zum Sintern des Materials an den dem Querschnitt des Objekts in der Schicht entsprechenden Stellen;

**gekennzeichnet durch** eine Bestimmungseinrichtung zum Bestimmen der von dem Pulver beim Vorerwärmen aufgenommenen Wärmemenge (dQ) pro Temperaturerhöhung (dT) bei wenigstens zwei Temperaturen.

13. Vorrichtung nach Anspruch 12, **gekennzeichnet durch** eine Berechnungseinrichtung zum Berechnen der Änderung der augenommenen Wärmemenge pro Temperaturerhöhung in Abhängigkeit von der Temperatur.

14. Vorrichtung nach Anspruch 12 oder 13, **dadurch gekennzeichnet, daß** die Berechnungseinrichtung so ausgebildet ist, daß sie aus der Änderung der aufgenommenen Wärmemenge pro Temperaturerhöhung eine materialspezifische Temperatur ($T_{characteristisch}$) des pulverförmigen Materials wie die Glasübergangstemperatur und/oder die Onsettemperatur und/oder die Schmelztemperatur bestimmt.

15. Vorrichtung nach Anspruch 14, **gekennzeichnet durch** eine Steuereinrichtung (10) für die Heizeinrichtung (8,9), die die Heizeinrichtung so steuert, daß in Abhängigkeit von der ermittelten Änderung die Arbeitstemperatur ($T_A$) auf die das Pulver vorzuerwärmen ist, eingestellt wird.

16. Vorrichtung nach Anspruch 15, **dadurch gekennzeichnet, daß** die Steuereinrichtung (10) so ausgebildet ist, daß die Arbeitstemperatur so eingestellt wird, daß sie um eine vorgegebene Temperaturdifferenz unterhalb einer ermittelten materialspezifischen Temperatur liegt.

17. Vorrichtung nach einem der Ansprüche 12 bis 16, **gekennzeichnet durch** eine Steuereinrichtung zum Steuern der Bestrahlungseinrichtung (5), daß die zum Sintern erforderliche Leistung der Strahlungsquelle in Abhängigkeit von der ermittelten aufgenommenen Wärmemenge pro Temperaturerhöhung eingestellt wird.

18. Vorrichtung nach einem der Ansprüche 12 bis 17, **dadurch gekennzeichnet, daß** die Bestrahlungseinrichtung als Laser ausgebildet ist.

19. Vorrichtung nach einem der Ansprüche 12 bis 18, **dadurch gekennzeichnet, daß** die Heizeinrichtung als Heizstrahler (9), insbesondere als Infrarotstrahler ausgebildet ist. -

20. Vorrichtung nach einem der Ansprüche 12 bis 19, **dadurch gekennzeichnet, daß** zum Messen der Temperatur des pulverförmigen Material ein Temperatursensor (11), bevorzugt ein Pyrometer vorgesehen ist.

**Claims**

1. Method of manufacturing a three-dimensional object by layerwise solidifying a powdery material by sintering the material at locations corresponding to the cross section of the object by impact of radiant energy, comprising the steps of:

applying a layer of the powdery material on a support (2) or on a previously sintered layer;
pre-heating the powdery material to a working temperature ($T_A$) below a temperature, at which the powder is sintered; and
sintering the material at the locations corresponding to the cross section of the object in the layer; wherein
at least at two temperatures, a step of controlled heating an applied powder layer is performed, **characterized in that**
the step of controlled heating includes determining the heat quantity (dQ), which is absorbed by the powder during pre-heating, per increase of temperature (dT).

2. Method according to claim 1, **characterized in that** the change (dQ/dT) of the absorbed heat quantity per increase of temperature is determined dependent on the temperature.

3. Method according to claim 1 or 2, **characterized in that** a material specific temperature ($T_{charakteristisch}$) of the powdery material such as the melting point and/or the glass transition temperature and/or the onset-temperature is determined by the change of the absorbed heat quantity per increase of temperature.

4. Method according to claim 3, **characterized in that** the working temperature ($T_A$), to which the powder is to be pre-heated, is set dependent on the determined change.

5. Method according to claim 4, **characterized in that** the working temperature ($T_A$) is set such that it lies below a determined material specific temperature ($T_{charakteristisch}$) by a pre-determined temperature difference ($\Delta T_{red}$).

6. Method according to any one of claims 1 to 5, **characterized in that** the power of the radiation source, which is required for sintering, is determined dependent on the determined absorbed heat quantity per increase of temperature.

7. Method according to any one of claims 1 to 6, **characterized in that** the heat power of a heating means (8, 9) used for pre-heating is controlled and/or feedback-controlled dependent on the determined absorbed heat quantity per increase of temperature.

8. Method according to any one of claims 1 to 7, **characterized in that** the step of determining the heat quantity absorbed by the powder per increase of temperature is performed before the building process at an applied powder layer.

9. Method according to any one of claims 1 to 8, **characterized in that** the step of determining the heat quantity absorbed by the powder per increase of temperature is performed during the building process.

10. Method according to any one of claims 1 to 9, **characterized in that** a laser is used as radiation source.

11. Method according to any one of claims 1 to 10, **characterized in that** a synthetic powder, preferably polyamide or polysterene, is used as powder.

12. Device for manufacturing a three-dimensional object by layerwise solidifying a powdery material by sintering the material at the locations corresponding to the cross section of the object by impact of radiant energy, comprising:

a material application device (7) for applying the powdery material on a support (2) or on a previously solidified layer;
a heating means (8, 9) for pre-heating the applied layer to a working temperature ($T_A$) below the temperature, at which the powder is sintered; and
a radiating means (5) for sintering the material at the locations corresponding to the cross section of the object in the layer;

**characterized by** a determining means for determining the heat quantity (dQ), which is absorbed by the powder during pre-heating, per increase of temperature (dT) at least at two temperatures.

13. Device according to claim 12, **characterized by** a calculating means for calculating the change of the absorbed heat quantity per increase of temperature dependent on the temperature.

14. Device according to claim 12 or 13, **characterized in that** the calculating means is formed such that it determines a material specific temperature ($T_{charakteristisch}$) of the powdery material such as the glass transition temperature and/or the onset-temperature and/or the melting point from the change of the absorbed heat quantity per increase of temperature.

15. Device according to claim 14, **characterized by** a control means (10) for the heating means (8, 9), which controls the heating means such that the working temperature ($T_A$), to which the powder is to be pre-heated, is set dependent on the determined change.

16. Device according to claim 15, **characterized in that** the control means (10) is formed such that the working temperature is set such that it lies below a determined material specific temperature by a pre-determined temperature difference.

17. Device according to any one of claims 12 to 16, **characterized by** a control means for controlling the radiating means (5) such that the power of the radiation source, which is required for sintering, is set dependent on the determined absorbed heat quantity per increase of temperature.

18. Device according to any one of claims 12 to 17, **characterized in that** the radiation means is formed as a laser.

19. Device according to any one of claims 12 to 18, **characterized in that** the heating means is formed as heat radiator (9), preferably as infrared-radiator.

20. Device according to any one of claims 12 to 19, **characterized in that** a temperature sensor (11), preferably a pyrometer, is provided for measuring the temperature of the powdery material.

## Revendications

1. Procédé de réalisation d'un objet tridimensionnel moyennant la consolidation couche par couche d'un matériau pulvérulent par frittage du matériau aux emplacements correspondants à la section de l'objet sous l'effet d'une énergie de rayonnement, comportant les étapes :

- dépôt d'une couche de matériau pulvérulent sur un substrat (2) ou une couche frittée précédemment ;
- préchauffage du matériau pulvérulent à une température ($T_A$) de travail, inférieure à la température à laquelle se produit le frittage de la poudre ; et
- frittage du matériau aux emplacements correspondants à la section de l'objet dans la couche ;

une étape de chauffage commandé d'une couche de poudre déposée étant mise en oeuvre en présence d'au moins deux températures,
**caractérisé en ce que** l'étape de chauffage commandé contient la détermination de la quantité (dQ) de chaleur, absorbée par la poudre pendant le préchauffage, par augmentation (dT) de température.

2. Procédé selon la revendication 1, **caractérisé en ce que** la variation (dQ/dT) de la quantité de chaleur absorbée par augmentation de température est déterminée en fonction de la température.

3. Procédé selon la revendication 1 ou 2, **caractérisé en ce qu'**à partir de la variation de la quantité de chaleur absorbée par augmentation de température est déterminée une température ($T_{caractéristique}$) spécifique du matériau pulvérulent, telle que la température de fusion et/ou la température de transition vitreuse et/ou la température onset.

4. Procédé selon la revendication 3, **caractérisé en ce que** la température ($T_A$) de travail à laquelle la poudre doit être préchauffée est réglée en fonction de la variation calculée.

5. Procédé selon la revendication 4, **caractérisé en ce que** la température ($T_A$) de travail est réglée de telle sorte qu'elle se situe, selon une différence

($\Delta T_{red}$) de température prédéfinie, en dessous d'une température ($T_{caractéristique}$) spécifique du matériau calculée.

6. Procédé selon l'une quelconque des revendications 1 à 5, **caractérisé en ce que** la puissance de la source de rayonnement, nécessaire pour le frittage, est déterminée en fonction du calcul de la quantité de chaleur absorbée par augmentation de température.

7. Procédé selon l'une quelconque des revendications 1 à 6, **caractérisé en ce que** la puissance de chauffage d'un dispositif (8, 9) de chauffage, utilisé pour le préchauffage, est commandée et/ou réglée en fonction du calcul de la quantité de chaleur absorbée par augmentation de température.

8. Procédé selon l'une quelconque des revendications 1 à 7, **caractérisé en ce que** l'étape de détermination de la quantité de chaleur absorbée par la poudre par augmentation de température est mise en oeuvre avant le processus de constitution d'une couche de poudre déposée.

9. Procédé selon l'une quelconque des revendications 1 à 8, **caractérisé en ce que** l'étape de détermination de la quantité de chaleur absorbée par la poudre par augmentation de température est mise en oeuvre pendant le processus de constitution.

10. Procédé selon l'une quelconque des revendications 1 à 9, **caractérisé en ce que** la source de rayonnement utilisée est un laser.

11. Procédé selon l'une quelconque des revendications 1 à 10, **caractérisé en ce que** la poudre utilisée est une poudre de matière plastique, de préférence un polyamide ou polystyrène.

12. Dispositif de réalisation d'un objet tridimensionnel moyennant la consolidation couche par couche d'un matériau pulvérulent par frittage du matériau aux emplacements correspondants à la section de l'objet sous l'effet d'une énergie de rayonnement, comportant :

   - un dispositif (7) d'application de matériau destiné à déposer le matériau pulvérulent sur un substrat (2) ou une couche frittée précédemment ;
   - un dispositif (8, 9) de chauffage destiné à préchauffer la couche déposée à une température ($T_A$) de travail, inférieure à la température à laquelle se produit le frittage de la poudre ; et
   - un dispositif (5) de rayonnement destiné à fritter le matériau aux emplacements correspondants à la section de l'objet dans la couche ;

**caractérisé par** un dispositif de détermination destiné à déterminer la quantité (dQ) de chaleur, absorbée par la poudre pendant le préchauffage, par augmentation de température (dT) en présence d'au moins deux températures.

13. Dispositif selon la revendication 12, **caractérisé par** un dispositif de calcul destiné à calculer la variation de la quantité de chaleur absorbée par augmentation de température en fonction de la température.

14. Dispositif selon la revendication 12 ou 13, **caractérisé en ce que** le dispositif de calcul est réalisé de telle sorte qu'à partir de la variation de la quantité de chaleur absorbée par augmentation de température, il détermine une température ($T_{caractéristique}$) spécifique du matériau pulvérulent, telle que la température de transition vitreuse et/ou la température onset et/ou la température de fusion.

15. Dispositif selon la revendication 14, **caractérisé par** un dispositif (10) de commande pour le dispositif (8, 9) de chauffage, lequel commande le dispositif de chauffage de telle sorte que la température ($T_A$) de travail à laquelle la poudre doit être préchauffée est réglée en fonction de la variation calculée.

16. Dispositif selon la revendication 15, **caractérisé en ce que** le dispositif (10) de commande est réalisé de telle sorte que la température de travail est réglée de telle sorte qu'elle se situe, selon une différence de température prédéfinie, en dessous d'une température spécifique du matériau calculée.

17. Dispositif selon l'une quelconque des revendications 12 à 16, **caractérisé par** un dispositif de commande destiné à commander le dispositif (5) de rayonnement, de telle sorte que la puissance de la source de rayonnement, nécessaire pour le frittage, est déterminée en fonction du calcul de la quantité de chaleur absorbée par augmentation de température.

18. Dispositif selon l'une quelconque des revendications 12 à 17, **caractérisé en ce que** le dispositif de rayonnement est réalisé sous forme de laser.

19. Dispositif selon l'une quelconque des revendications 12 à 18, **caractérisé en ce que** le dispositif de chauffage est réalisé sous la forme d'un radiateur (9), en particulier sous la forme d'un radiateur à rayonnement infrarouge.

20. Dispositif selon l'une quelconque des revendications 12 à 19, **caractérisé en ce qu'**il est prévu un capteur (11) de température, de préférence un pyromètre, pour mesurer la température du matériau pulvérulent.

Fig. 1

FIG.2

| | |
|---|---|
| S1 | Starttemperatur $T_{initial}$ |
| S2 | Erhöhung der Temperatur um dT |
| S3 | Aufzeichnung der Wärmemenge dQ um Temperaturerhöhung dT zu erzielen |
| S4 | Berechnung $c_p(T) = dQ/dT$ |
| S5 | Vergleich von $c_p(T)$ mit $c_p(T_{initial})$ |
| S6 | Bestimmung von $T_{characteristisch}$  Bestimmung von $T_A = T_{characteristisch} - \Delta T_{red}$ |

keine signifikante Änderung von $c_p$

signifikante Änderung von $c_p$

FIG. 3

Aufheizkurve PA2200

dQ/dt in kJ/°C

1600 1400 1200 1000 800 600 400 200 0

150 155 160 165 170 175 180 185 190 195 200

Temperatur in °C

— ◆ — dQ/dT (gemessen)
········· dQ/dT(erwartet)

$T_{final}$

$T_{onset}$

$\Delta T_{red}$

$T_A = T_{onset} - \Delta T_{red}$

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0764079 A1
- US 6153142 A
- US 5908569 A